Europäisches Patentamt

European Patent Office

Office européen des brevets

(19)

(11) Publication number: **0 219 265**
A2

(12) **EUROPEAN PATENT APPLICATION**

(21) Application number: 86307519.8

(22) Date of filing: 01.10.86

(51) Int. Cl.⁴: **B 65 D 41/04**

(30) Priority: 08.10.85 GB 8524778

(43) Date of publication of application:
22.04.87 Bulletin 87/17

(84) Designated Contracting States:
BE CH DE ES FR GB IT LI NL

(71) Applicant: W.R. GRACE & CO.
Grace Plaza 1114 Avenue of the Americas
New York New York 10036(US)

(72) Inventor: Sinnott, Kenneth Martin
Church End Hilton
Huntingdon Cambridgeshire PE18 9NB(GB)

(72) Inventor: Thwaites, Geoffrey Richard
11, Harvey Goodwin Avenue
Cambridge CB4 3EX(GB)

(72) Inventor: Davenport, Noel Ernest
34, Hatchet Lane Stonely
Nr. Kimbolton Huntingdon Cambridgeshire(GB)

(74) Representative: Barlow, Roy James et al,
J.A.KEMP & CO. 14, South Square Gray's Inn
London WC1R 5EU(GB)

(54) Plastic container closure with moulded liner.

(57) A cap (1) of plastic material has a sealing liner (8) of a relatively softer plastics material moulded therein. The cap is heated before or during moulding of the liner composition applied to the cap, to enhance the bond of the liner to the cap.

FIG. I

EP 0 219 265 A2

## "PLASTIC CONTAINER CLOSURE WITH MOULDED LINER

The present invention relates to container closures, in this case to screw-on closures which may, for example, be used to seal bottles with pressurised contents.

It is known to provide plastic bottle caps, and to place in such caps liners of relatively softer plastic material, either in the form of pre-formed insert mem. s which are simply placed in the finished closure, or in the form of flowed in gaskets formed in the interior of the plastic cap.

In the past it has been known to provide moulded liners in metal closures such as crown closures, and we now propose to form a liner in a plastic screw-on closure by moulding in situ.

Accordingly, one aspect of the present invention provides a method of lining a container closure, comprising:- introducing into the container closure a quantity of molten plastic material which when cool is softer than the plastic composition from which the closure is made; moulding the molten plastic material with a punch which is cooler than the molten plastic material, thereby forming the molten plastic material into a solid liner in the relatively harder plastic closure; and, before or during moulding of the liner, heating the closure to a temperature less than its distortion point in order to enhance bonding of the liner to the closure.

A further aspect of the invention provides a plastic closure body having an end panel and a skirt which has threads to engage the neck of a container; and a liner which has been moulded _in situ_ in the closure, of a plastic material which is softer than that of said closure body, the closure body having been heated to a temperature below its deformation point either before or during moulding of the molten liner-forming plastic material, to improve the bond between the closure and the liner.

The bond between the closure and the liner may be further enhanced by mechanical formations to effect interengagement of the liner and closure.

In order that the present invention may more readily be understood the following description is given, merely by way of example, with reference to the accompanying drawings, in which

FIGURE 1 is a transverse sectional view taken on a plane perpendicular to the plane of the end panel of a plastic cap in accordance with the present invention; and

FIGURE 2 is a detail of a mould useful for the method of this invention.

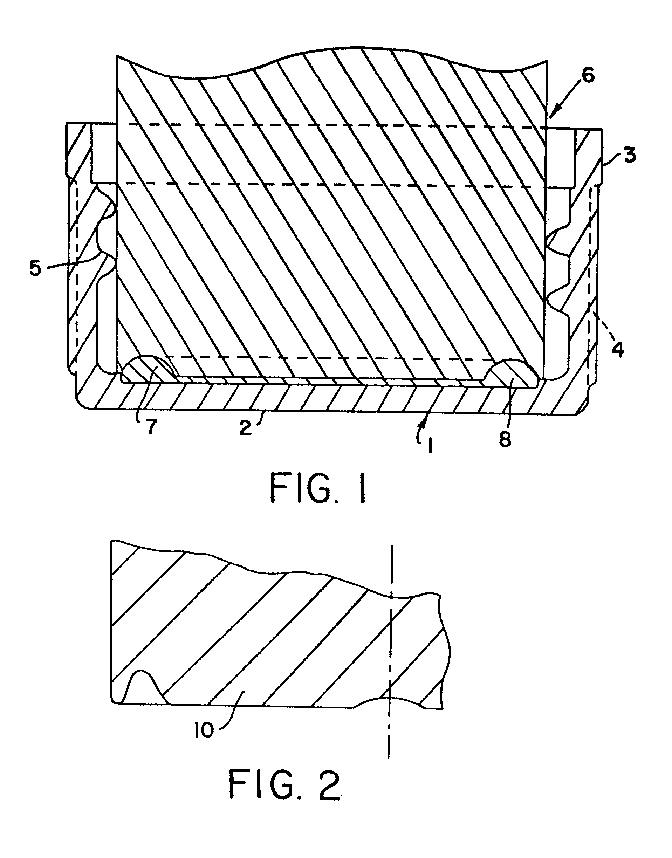

In Figure 1, there is shown the cap 1 during the liner moulding operation. The cap comprises an end panel 2 and an upstanding cylindrical skirt 3 having external ribbing 4 to facilitate unscrewing of the cap from a bottle neck manually by the consumer. Internally, the skirt has threads 5 which will effect the screwing engagement with the bottle neck.

The exterior of the skirt 3 may, if desired, be of a modified form so that the outer profile of the skirt near the corner between the skirt 3 and the end panel 2 has a larger radius than the radius of the outer tips of the ribbing 4, thereby ensuring that when the closures 1 are jostled in upturned configuration on a support surface during feeding of the closures towards the closure-lining or container-closing apparatus the possibility of meshing of the ribbing 4 of adjacent closures is eliminated and thus there is no risk of jamming of the closures during transport.

A moulding die 6 is shown in the drawing as having an annular recess 7 extending around the periphery of its end face to define an annular liner 8 of a plastic material which is softer than the plastic material of which the cap 1 is moulded.

In order to assist bonding of the annular liner 8 to the end cap 2, the cap may be provided with an outer undercut shoulder 9 formed near the corner between the cap end panel 2 and the skirt 3. Other means of providing a mechanical interlock between the liner and the body of the closure may also be provided, such as a roughened surface or projections or depressions on the surface.

If desired, in order to facilitate moulding of the liner in the end cap with a predetermined profile, using a moulding die which clears the internal threads 5, it is possible for the cap skirt to be provided with a retaining flange near the corner, defining a boundary up to which the plastics composition of the liner can be urged by the moulding pressure, but the configuration of this flange is such that it co-operates with the cylindrical exterior of the die 6 to prevent further migration of the plastic composition axially upwardly towards the threads 5.

The profile of the gasket may, if desired, be defined by a "shut-off" mould which is designed to limit radially outward migration of the liner composition along the end panel 2 when forming the annular liner 8.

The plastic material used for moulding the closure may include a slip agent which can serve as mould release agent assisting moulding of the closure and/or as thread release agent assisting in facilitating unscrewing of the closure.

Any suitable plastic material may be used for moulding the closure, such as polypropylene, ethylene-propylene copolymer, polyethylene, polystyrene, or polyethylene-terephthalate; it may be with or without fillers; and it may include any suitable pigments, dyes, anti-static agents, anti-oxidants, and lubricants.

The plastic material used for the liner 8 may comprise low density polyethylene (LDPE) and/or linear low density polyethylene (LLDPE), or ethylene vinyl acetate

- 4 -

0219265

copolymer alone or blended with any one or more of pigments, anti-oxidants, and coloring materials. The liner may also comprise a copolymer of vinyl chloride and vinyl acetate. The liner may also include a filler, for example talc, calcium carbonate, clay (kaolin), titanium dioxide, and mixtures of these materials.

The liner may also include hollow micro balloons of glass or plastic, for example of polyvinylidene chloride.

The liner may equally be foamed by addition of a gas or a blowing agent and caused to foam either before, or during, or after moulding (for example by microwave heating after moulding).

One preferred form of plastics composition for the liner comprises:-

(a)  75 to 95 parts (preferably approximately 85 parts) by weight of LDPE or LLDPE,

(b)  10 to 20 parts (preferably approximately 15 parts) by weight of styrene-isoprene-styrene block copolymer, and/or a thermoplastic elastomeric mixture of substantially EPM or EPDM elastomer, EVA and process oil,

(c)  15 to 50 parts (particularly 20 to 40 parts) by weight of filler selected from talc, calcium carbonate, clay (kaolin), titanium dioxide and mixtures thereof, and

(d)  optionally up to 15 parts (and preferably approximately 10 parts) by weight of cork powder.

It should be pointed out that LLDPE is not pure polyethylene but is a copolymer of polyethylene and a small amount of another olefin such as kaprylene (see U.S. Patent No. 4,076,698 giving a detailed description of LLDPE, and Published European Patent Application No.0,009,376).

The styrene-isoprene-styrene block copolymers suitable for use in the liner are linear polymers (also called segmental polymers), in which the ends of the polyisoprene chains are in each case terminated by polystyrene segments. For the thermoplastic elastomeric mixture of substantially EPM or EPDM elastomer, EVA and process oil, suitable for use in the liner, reference is made to European Patent Application No. 0,032,804.

Another suitable form of liner composition comprises a composition containing a thermoplastic resilient material comprising

(a) a copolymer of an alpha-mono-olefine with another alpha-olefinically unsaturated monomer, or

(b) a mixture of poly-alpha-mono-olefine with a polymer of one or more alpha-olefinically unsaturated monomers, said polymer not being a poly-alpha-mono-olefine, or

(c) a mixture of polyisobutylene with another poly-alpha-mono-olefine.

The te... "alpha-mono-olefine" means an unsubstituted alpha-mono-olefine and the term "poly-alpha-mono-olefine" means a homopolymer of an alpha-mono-olefine. The term "alpha-olefinically unsaturated monomer" includes any monomer containing at least one ethylenic double bond in the alpha-position. Thus, besides alpha-mono-olefines, such compounds as vinyl acetate, acrylic acid, acrylic acid esters and isoprene fall within the definition.

Copolymer (a) referred to above is a copolymer of an alpha-mono-olefine, e.g. ethylene, with another alpha-olefinically unsaturated monomer, which may be another alpha-mono-olefine such as propylene, or a non-alpha-mono-olefine such as vinyl acetate or acrylic acid. Copolymer (a) may be formed from more than two monomers. For instance, it may be a copolymer of one alpha-mono-olefine with another and with an alpha-olefinically unsaturated monomer, e.g. a rubbery terpolymer comprising ethylene and propylene as the major ingredient, and a third alpha-olefine as a minor ingredient.

The following specific materials are particularly suitable:

(1)   Materials described in our GB-A-1,092,161.

(2)   Copolymers of ethylene and vinyl acetate.

(3)   Mixtures of copolymers of ethylene and vinyl acetate with polyethylene.

(4)   Copolymers of ethylene and acrylic acid including esters thereof.

(5)   Mixtures of copolymers of ethylene and acrylic acid, including esters thereof, with polyethylene.

(6)   Plasticized polyvinyl chloride.

(7)   Mixtures of copolymers of ethylene and propylene with polyethylene.

(8)   Mixtures of polyethylene with chlorosulphonated polyethylene.

(9)   Mixtures of polyethylene with butyl rubber.

(10) Mixtures of polyethylene with polyisobutylene.

(11) Mixtures of ethylene/vinyl acetate copolymers with ethylene/propylene copolymers.

(12) Mixtures of any of the compositions (4), (5), (7), (8), (9), and (10) with ethylene/vinyl acetate copolymers, and in particular mixtures of polyethylene, butyl rubber, and ethylene/vinyl acetate copolymers.

(13) Polyethylene.

(14) Mixtures of polyethylenes of different densities, molecular weights, or molecular weight distributions.

The ethylene/vinyl acetate polymers will normally contain 5-50%, preferably 12-40%, of vinyl acetate.

The layer of liner-forming material may be caused to adhere to the closure by the action of heat, pressure or an adhesive.

The end panel 2 of the closure may, for example, be corona discharge treated in order to enhance adhesion of the liner 8 to the end panel 2.

If desired, an adhesion lacquer may be provided for assisting bonding of the liner to the closure.

The closure may, if desired, include a reduced diameter portion at the root of the skirt in order to provide localised increase of sealing pressure when the lined closure is applied to a bottle neck. Such a characteristic is described and claimed in our British Patent No. 2,116,529B.

The illustrations of the closure and of the liner in the drawing are not limiting, and any other suitable shape of either the closure or the liner may be provided. For example, the end panel of the closure may be generally flat but may include upstanding projections serving as the mechanical adhesion-enhancing means to interengage with the moulded liner, and the position of the liner on the end panel may be defined solely by the configuration of the mould and not by means of any shoulder such as 9 shown in the drawing.

The closure may, if desired, include an internal retaining bead on the skirt, near the corner between the skirt 3 and the end panel 2, to retain the moulded liner in place. This bead may be either continuous or interrupted.

The profile of the liner may, furthermore, be such that the liner seals on the inside corner of the bottle neck, as described and claimed in our European Patent Application No. 85304379.2.

The rim of the closure skirt, corresponding to the upper part of the skirt as shown in the drawing, may be provided with a "tamper evident" feature well known in the art, such as a reduced diameter portion which may be formed mechanically or by heat shrinkage so as to engage over an external rib on the neck of the bottle and to fracture when the closure is first removed from the bottle.

Furthermore, the closure may have any one of a range of diameters currently contemplated, or likely to be contemplated in the future, for bottle sealing use.

The threads 5 may, if desired, include vent slots providing discontinuities in the helical threads and able to allow release of pressure in the headspace over a carbonated beverage in the closed bottle, before the threads disengage, thereby preventing the cap from being blown off as the threads disengage.

As is already known in the art, the closure may include printing either externally for identification of the contents, or internally at the surface between the gasket and the closure top panel for "promotional features". Where such internal printing for promotional purposes is provided, the heating of the cap before application of the lining composition will be carefully controlled to impart peelability to the liner, i.e. to enable the consumer to remove the liner readily from the closure to read the printing. The printing may, if desired become apparent on the liner by a transfer process.

The cap may, if desired, be provided on the interior of the end panel 2 with a rib which serves to brace the relatively softer plastic composition of the liner 8 and is therefore embedded in the liner 8 but acts to press the liner against the end of the bottle neck, thereby increasing the stress within the gasket and enhancing the pressure-sealing action.

If desired the skirt of the closure may be provided, near its rim, with internal axially extending ribs to rigidify the skirt.

A further possibility is for the end panel of the closure to be inwardly convex before lining, such that the centre of the end panel is domed towards the thread portion of the skirt, and the end panel may then during lining be deformed either to become less markedly convex, or to become flat, or to become oppositely domed by the pressure of the moulding die 6, in such a way that the centre of the end panel will be the first part to contact the moulding die and this will urge the liner composition radially outwardly towards the periphery of the end panel where the maximum thickness of liner is required in order to seal against the container neck rim.

The operation of forming a closure in accordance with the present invention is carried out as follows:-

A plastic closure such as the closure 2 is pre-formed ready to receive its liner.

Before or during the lining operation, the closure must be in a heated condition to facilitate bonding of the liner. This may be achieved either by moulding the liner immediately after the step of moulding the closure, and therefore before the closure has an opportunity of losing all of the heat imparted to it during the moulding operation, or by pre-heating of a cool closure before moulding of the liner, or by applying sufficient heat to the closure during moulding of the liner. For example, the closure may be heated during application of the molten liner-forming material but before moulding of that material.

The heating of the closure should be such that it does not distort the closure before or during the liner moulding operation. Preferably the temperature to which the closure heated is as high as possible without such distortion, and the temperature is at least $70^{\circ}C$. One possible upper limit is the distortion point of polypropylene, bearing in mind that a preferred form of closure is made of polypropylene.

The precise temperature may be chosen to satisfy the above functional requirements, and may for example be in the range $70^{\circ}C$ to $150^{\circ}C$, more preferably in the range $90^{\circ}C$ to $120^{\circ}C$.

Suitable plastic composition is then extruded to form a blob of molten composition which is 0219265 placed in the interior of the upturned closure (i.e. in the configuration as shown in the drawing). The contact of the hot molten liner composition with the already hot closure will leave the liner composition and the plastic of the closure ready to adhere to one another with ease.

A moulding die 6 is then thrust into the closure while supported in its upturned configuration, and serves to displace the liner composition into a suitable location spaced from the centre of the closure, in order to form the profile of the liner 8. In order to facilitate evacuation of air from the space between the end panel 2 of the closure and the adjacent face of the moulding die 6, it may be advantageous for the blob of liner composition to be placed eccentrically in the closure so that one part of its periphery will be closer to the skirt 3 than any other part and as the moulding pressure causes radially outward migration of the lining composition it is this particular part of the periphery of the liner composition blob which first contacts the skirt and then the area of contact between the liner composition and the skirt spreads around in a pincer movement towards the diametrically opposite part of the skirt, and in so doing allows escape of all of the air between the internal surface of the end panel 2 and the moulding die.

## EXAMPLE 1

Liners were moulded in three samples of a pre-threaded polypropylene bottle cap. Into each cap was deposited a blob of molten liner-forming composition comprising 75 parts by weight of Escorene Ultra UL53019-CC (an EVA copolymer available from Esso Corporation and having 19% vinyl acetate, with a melt flow index of 530), 20 parts by weight of AC-617 (a polyethylene wax available from Allied Corporation), 5 parts by weight of Pentalyn H (hydrogenated pentaerythritol ester of rosin), 1 part by weight of titanium dioxide as a pigment, 1 part by weight of silicone oil, and 0.2 parts by weight of Irganox 1076 (an anti-oxidant). The blobs were then pressed with the die 10 shown in Figure 2 to form moulded liners.

The three caps with the thus-moulded liners were tested for venting pressure values, using an Owens Illinois "Secure Seal Tester" and each of the three samples gave a venting pressure of in excess of 150 p.s.i (1034 kpa). One of the samples gave a removal torque of 16 in.lbs (18.4 cm.kg) and the other two samples gave a removal torque of 13 in.lbs (14.95 cm.kg).

### EXAMPLE 2

Using the mould 10 of Figure 2, a further three samples of the polypropylene pre-threaded cap were lined with a composition comprising 70 parts by weight of the escorene ultra u153019-cc, 20 parts by weight of ac-617, and 10 parts by weight of pentalyn H.

The measured venting pressure values for the three samples were 145 p.s.i. (999 kPa), 140 p.s.i. (964 kPa) and 150 p.s.i. (1034 kPa). The removal torques of these samples were, respectively, 14 in.lbs (16.1 cm.kg), 16 in.lbs (18.4 cm.kg), and 15 in.lbs (17.25 cm.kg).

### EXAMPLE 3

A further batch of polypropylene pre-threaded bottle caps was lined by moulding liners of a composition comprising 70% LDPE and 30% butyl rubber. Again the die 10 of Figure 2 was used. The venting pressure values were tested and it was found that a first of the samples gave a value of 100 p.s.i. (689 kPa), and the second and third samples gave values of 150 p.s.i. (1034 kPa). The removal torque values for the same samples were, respectively, 13 in.lbs (14.95 cm.kg), 12 in.lbs (13.8 cm.kg), and 11 in.lbs (12.65 cm.kg).

- 12 -

<u>CLAIMS</u>

0219265

1. A method of lining a container closure, comprising:- introducing into the container closure a quantity of molten plastic material which when cool is softer than the plastic composition from which the closure is made; and forming a liner comprising said softer plastic material in the closure; characterised in that the liner is shaped by moulding the molten plastic material with a punch which is cooler than the molten plastic material, thereby forming the molten plastic material into a solid liner in the relatively harder plastic closure; and, before or during said moulding of the liner, heating the closure to a temperature less than its distortion point in order to enhance bonding of the liner to the closure.

2. A method according to claim 1, characterised in that the liner composition is placed eccentrically in the closure.

3. A method according to either of the preceding claims, characterised in that the closure has its end panel corona discharge treated at least on the inwardly facing surface thereof.

4. A method according to any one of the preceding claims characterised in that, before moulding of the liner, the closure has its end panel domed so as to present a convex surface to the interior of the closure, and in that during the liner moulding operation the closure end panel becomes deformed so as to be either less markedly internally convex, or flat, or outwardly convex.

5. A method according to any one of the preceding claims, characterised by including the step of applying an adhesion lacquer on the internally facing surface of the closure end panel.

6. A lined screw-on closure comprising:- a plastic closure body having an end panel and a skirt which has threads to engage the neck of a container; and a liner of a plastic material which is softer than that of said closure body; characterised in that the liner has been mechanically moulded _in situ_ in the closure by use of a punch and by heating of the closure body to a temperature below its deformation point either before or during moulding of the molten liner-forming plastic material, to improve the bond between the closure and the liner.

7.   A closure according to claim 6, characterised in that the liner includes hollow micro balloons of glass or of plastics material.

8.   A closure according to either of claims 6 and 7, characterised in that the closure includes a reduced diameter internal portion of the skirt near the root of the skirt, to increase localised compression of the liner composition against the bottle neck exterior.

9.   A closure according to any one of claims 6 to 8, further characterised by including mechanical formations to effect interengagement of the liner and closure for further enhancing the bond between the closure and the liner.

10.   A closure according to any one of claims 6 to 9, further characterised by including a radially inwardly extending flange defined on the skirt of the closure, to confine the migration of gasket material during moulding.

11.   A closure according to any one of claims 6 to 10, characterised in that the exterior of the skirt is ribbed to assist manual gripping of the closure to facilitate unthreading, in that the external ribbing ends short of the corner between the closure skirt and the closure end panel, and in that at the corner the radius is no smaller than the diameter between the tips of the ribbing, to prevent intermeshing of the ribbing on adjacent closures during handling of the closures before

0219265

lining.

12. A closure according to any one of claims 6 to 11, further characterised by including an internal promotional feature requiring stripping of the liner from the closure to reveal printing on either the closure or the liner.

13. A closure according to any one of claims 6 to 12, characterised by having been applied to a bottle neck so that the liner engages the radially inner part of the bottle neck surface.

14. A closure according to any one of claims 6 to 13, characterised in that the liner is foamed.

15. A closure according to any one of claims 6 to 14, characterised in that the closure includes a tamper-evident feature.

FIG. I

FIG. 2